# EUROPÄISCHE PATENTSCHRIFT

(11) **EP 0 824 433 B1**
(45) Veröffentlichungstag und Bekanntmachung des Hinweises auf die Patenterteilung: **25.08.1999**
(21) Anmeldenummer: 96910018.9
(22) Anmeldetag: 03.04.1996
(51) Int. Cl.: B60T 15/14, B60T 13/66, B60T 7/04

(54) **SOLLWERTGEBER**
SETPOINT GENERATOR
GENERATEUR DE VALEUR DE REFERENCE

(30) Priorität: 29.04.1995 DE 19515842
(43) Veröffentlichungstag der Anmeldung: 25.02.1998
(73) Patentinhaber: Continental Teves AG & Co. oHG, 60488 Frankfurt (DE)
(72) Erfinder: FEIGEL, Hans-Jörg, D-611891 Rosbach (DE); KLEIN, Andreas, D-61350 Bad Homburg (DE); NEUMANN, Ulrich, D-64380 Rossdorf (DE); SCHIEL, Lothar, D-65719 Hofheim (DE)
(86) Internationale Anmeldenummer: EP9601455
(87) Internationale Veröffentlichungsnummer: WO9634784

(56) Entgegenhaltungen:
- EP-A- 0 190 411
- US-A- 5 230 549

## Beschreibung

Die vorliegende Erfindung betrifft einen Sollwertgeber nach dem Oberbegriff des Anspruchs 1.

Ein derartiger Sollwertgeber, insbesondere für ein Bremspedal in einem Kraftfahrzeug, ist aus der DE 35 04 096 bekannt. Er dient zur Ansteuerung einer elektrischen Bremsanlage und enthält eine Parallelschaltung eines Wegsensors und eines Kraftsensors, wobei der Kraftsensor die Führungsgröße liefert. Den Sensoren sind elektronische Hauptschaltungen nachgeschaltet, welche die Signale der Sensoren nach verschiedenen Kriterien auf Plausibilität prüfen und im Fehlerfall eine Warnlampe ansteuern. Um eine Höchstmaß an Sicherheit und Genauigkeit zu bieten, arbeiten die Sensoren des bekannten Sollwertgebers nach unterschiedlichen Prinzipien, wobei nur im Falle einer festgestellten Fehlfunktion des Kraftsensors die Führungsgröße vom Wegsensor geliefert wird.

Als nachteilig an dem bekannten Sollwertgeber ist anzusehen, daß insbesondere bei besonders kleinen Signalen das Rauschen in der Größenordnung der Signale liegt und sie dadurch verfälscht. Es ist daher eine Filterung der Signale vorgesehen, die allerdings zu einem schlechten Zeitverhalten führt, d.h. einer langsamen Reaktion. Dies vermittelt dem Fahrer ein träges Verhalten des Fahrzeugs, das unerwünscht ist. Wird allerdings keine Filterung der Signale vorgenommen, so tritt ein unruhiges Bremsverhalten auf, was ebenfalls als störend empfunden wird.

Aus der US-A-5,230,549 ist eine Bremsanlage für Kraftfahrzeuge bekannt, die einen ersten Sensor zur Ermittlung des Betätigungsweges eines Bremspedals sowie einen zweiten Sensor zur Ermittlung einer auf das Bremspedal einwirkenden Betätigungskraft aufweist. Außerdem ist eine elektronische Steuereinheit vorgesehen, in der in Abhängigkeit von einem die Fahrzeugverzögerung repräsentierenden weiteren Signal das vom ersten oder vom zweiten Sensor gelieferte Signal zur Ansteuerung der Bremsen weiterverarbeitet wird.

Aufgabe der Erfindung ist es daher, die Funktionssicherheit der bekannten Sollwertgeber zu erhöhen und den Komfort zu verbessern.

Gelöst wird diese Aufgabe durch die im kennzeichnenden Teil des Anspruchs 1 angegebenen Maßnahmen. Die Ausgangssignale der Sensoren werden dabei so gewichtet, daß in den Bereichen, in denen ein schlechtes Signal/Rauschverhältnis auftritt, das entsprechende Sensorsignal einen weniger großen Anteil als das weniger stark gestörte hat, so daß sich in der Summe ein weitgehend ruhiger Sollwert ergibt. Es wird somit ein über den gesamten Arbeitsbereich geringeres Rauschen erzielt.

Es ist dabei vorgesehen, daß die Wichtung in Abhängigkeit von dem Ausgangssignal zumindest eines der Sensoren erfolgt. Die Wichtung kann dabei vom Sensorsignal selbst abhängig sein. Der Wichtungsfaktor ist also beispielsweise dann klein, wenn das Signal selbst klein ist und somit ein schlechtes Signal/Rauschverhältnis aufweist. Existiert ein charakteristischer Bereich, in dem bekanntermaßen eine Störung des Sensorsignals auftritt, so kann auch in diesem Bereich ein entsprechend kleiner Wichtungsfaktor vorgesehen sein. Weiterhin ist vorgesehen, den Wichtungsfaktor auch vom Signal des anderen Sensors abhängig zu machen, beispielsweise wenn das Signal des einen Sensors gering gewichtet werden soll, während der Wichtungsfaktor des anderen Sensorsignals groß sein soll bzw. umgekehrt.

Erfindungsgemäß ist weiterhin vorgesehen, daß die Wichtung auch in Abhängigkeit von anderen in Kraftfahrzeugen vorhandenen Sensorsignalen erfolgt. Dies können Signale eines Temperatursensors, eines Feuchtigkeitssensors oder eines anderen geeigneten Sensors sein. Die Wichtung der Sensorsignale können somit auch an eine temperaturabhängige bzw. feuchtig keitsabhängig variierende Charakteristik angepaßt werden.

Die Wichtung kann dabei entsprechend einer einfachen analytischen Funktion entsprechen. Vorzugsweise wird aber mindestens eine beispielsweise in der elektronischen Eingangsschaltung abgespeicherte spezielle Wichtungsfunktion verwendet. Diese Wichtungsfunktion kann für jeden Fahrzeugtyp speziell ermittelt und experimentell oder als Ergebnis von Simulationsrechnungen oder anderen geeigneten Verfahren optimal an diesen Fahrzeugtyp und die gewünschte Bremscharakteristik angepaßt werden. Die so ermittelte Wichtungsfunktion kann dann an einem Fahrzeugtyp-spezifischen Festspeicher oder auch in einem überschreibbaren Speicher abgelegt sein. Es ist vorgesehen, eine einzige Wichtungsfunktion abzulegen, falls sich die eine oder die mehreren anderen Wichtungsfunktionen aus dieser ableiten lassen (z.B. komplementär sind). Mehrere verschiedene Wichtungsfunktionen sind dann abzuspeichern, wenn diese unabhängig voneinander sind, oder es aus anderen Gründen sinnvoll erscheint, diese getrennt abzuspeichern.

Je nach Aufbau und Erfordernissen der elektrischen Bremsanlage kann es vorteilhaft sein, einen aus der Summe der Teilsollwerte gebildeten Sollwert für den Druck einer hydraulischen Bremsanlage bzw. für den Betätigungsweg eines Bremsbelags oder aber einen der zu erzielenden Verzögerung proportionalen Sollwert zu ermitteln. Auf diese Weise kann der Sollwertgeber an die unterschiedlichsten Bremsanlagen angepaßt werden.

Im allgemeinen wird man sich für eine Größe für den Sollwert entscheiden (Druck, Weg ö.ä.) und diesen Sollwert von einem Regler verarbeiten lassen, der eine geeignete Stellgröße abgibt. Es ist aber auch vorteilhaft möglich, mehrere verschiedene Größen von entsprechenden Reglern verarbeiten zu lassen und erst die entsprechenden Stellgrößen zu summieren. Auf diese Weise kann der Fahrkomfort weiter erhöht werden, sowie eine Redundanz im Regelkreis erzielt werden.

Besonders günstig aufeinander abgestimmte Charakteristiken weisen Weg- und Drucksensor auf. Bei einer hydraulischen Bremsanlage tritt zu Beginn der Bremsung eine hohe Volumenaufnahme (entspricht einem großen Pedalweg) bei einem niedrigen Druck auf, während im weiteren Verlauf der Bremsung bereits bei geringem Pedalweg eine große Druckänderung erfolgt. Der Wegsensor liefert somit eine rauscharmes Signal in dem Bereich, in dem der Drucksensor ein schlechtes Signal/Rauschverhältnis aufweist und umgekehrt. Da der Fahrer auch bei einer elektrischen Bremsanlage das -ihm von der hydraulischen Bremsanlage bekannte Bremsgefühl haben soll, tritt die entsprechenden Chrakateristik auch hier auf.

Weitere Vorteile der Erfindung ergeben sich aus der nachfolgenden Beschreibung anhand der Abbildungen. Dabei zeigen:
- Fig. 1: ein Diagramm Hauptzylinderdruck p_{Hz} (V) in Abhängigkeit von der Volumenaufnahme V einer hydraulischen Bremsanlage,
- Fig. 2: eine schematische Darstellung der erfindungsgemäßen Wichtung und Überlagerung der Sensorsignale,
- Fig. 3: ein Beispiel besonders einfacher Wichtungsfunktionen und
- Fig. 4: ein schematisches Beispiel für die Weiterverarbeitung des ermittelten Sollsignals.

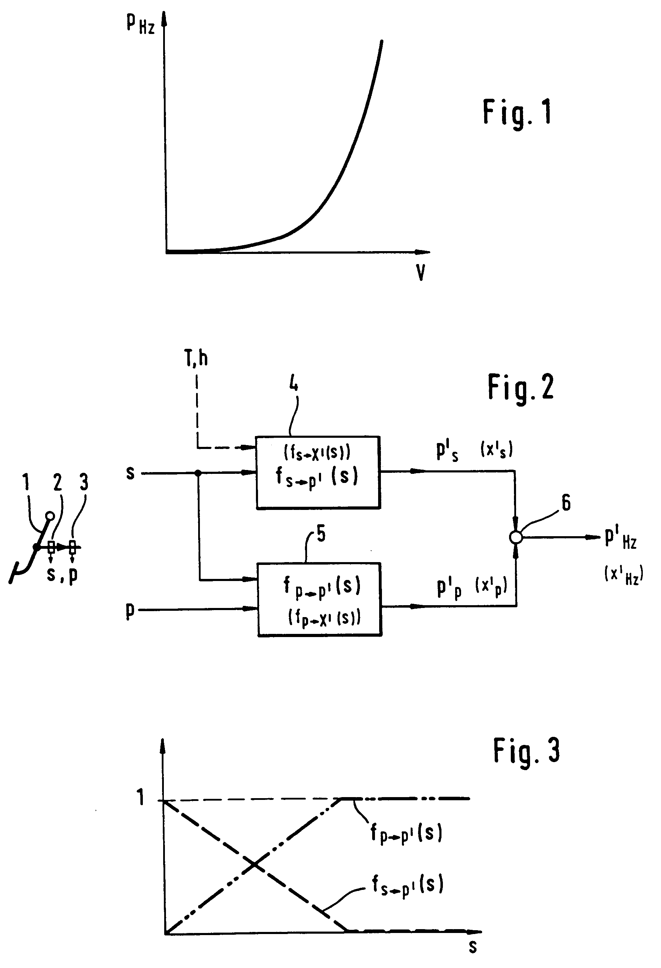

In Fig. 1 ist ein Diagramm Hauptzylinderdruck p_{Hz} (V) in Abhängigkeit von der Volumenaufnahme V einer hydraulischen Bremsanlage abgebildet. Man erkennt, daß bei einem niedrigen Druck p_{Hz} bereits eine große Volumenaufnahme V erfolgt, während im weiteren Verlauf der Bremsung ein steiler Druckanstieg bereits mit einer geringen Volumenaufnahme V einhergeht. Die Volumenaufnahme V ist dabei dem Pedalweg s proportional, während der in der Bremsanlage herrschende Hauptzylinderdruck p_{Hz} der vom Fahrer aufzubringende Pedalkraft proportional ist.

Fig. 2 zeigt in einer schematischen Darstellung die erfindungsgemäße Wichtung und Überlagerung der Sensorsignale. An einem Pedal 1 befinden sich ein Wegsensor 2 und ein Drucksensor 3. Der Druck p ist dabei der Pedalkraft F proportional. Die Ausgangssignale s,p der Sensoren 2,3 werden in Eingangsschaltungen 4,5 gewichtet und ergeben die Teilsollwerte p'ₛ und p'ₚ die in einem Summierer 6 zum Sollwert p'_{Hz} addiert werden. In der Eingangsschaltung 4 ist die Wichtungsfunktion f_{s - p'} (s) abgelegt, die das Wegsignal s in Abhängigkeit von sich selbst wichtet und in den Teilsollwert p'ₛ umgewandelt. Die elektronische Eingangsschaltung 5 wichtet den Druckwert p in Abhängigkeit vom Wegsignal s mit der Wichtungsfunktion f_{p - p'} (s) und ermittelt den Teilsollwert p'ₚ.

Alternativ dazu ist die Ermittlung des Sollwerts des Wegs x'_{Hz} eines Bremsbelags aus den Teilsollwerten x'ₛ und x'ₚ in Klammern angegeben. Dazu sind in den Eingangsschaltungen 4 bzw. 5 die entsprechenden Wichtungsfunktionen f_{s - x'}(s) bzw. f_{p - p'} (s) abgelegt.

Weiterhin ist schematisch angedeutet, daß ein Temperatursignal T und/oder ein Feuchtigkeitssignal h als Eingangsgrößen der Eingangsschaltung 4 vorgesehen sein können. Die entsprechende Wichtungsfunktion ist dann auch von den Werten T bzw. h abhängig: f_{s - p'} (s,T,h). Diese Abhängigkeit ist ebensowenig in der Fig.2 explizit dargestellt, wie die selbstverständlich ebenfalls mögliche Beaufschlagung der Eingangsschaltung 5 mit den entsprechenden Signalen.

In Fig. 3 sind Rampenfunktionen als besonders einfaches Beispiel für die Wichtungsfunktionen f_{s - p'} (s), f_{p - p'} (s) angegeben. In diesem Beispiel sind die Wichtungsfunktionen komplementär gewählt, d.h., ihre Summe ergibt immer eins. In diesem Fall ist es möglich, nur eine der Wichtungsfunktionen abzuspeichern und die anderen daraus zu berechnen. Der übliche Fall ist es aber, wie bereits in der Beschreibungseinleitung erwähnt, die Wichtungsfunktionen fahrzeugtypabhängig zu wählen und beispielsweise als Kennlinie zu speichern.

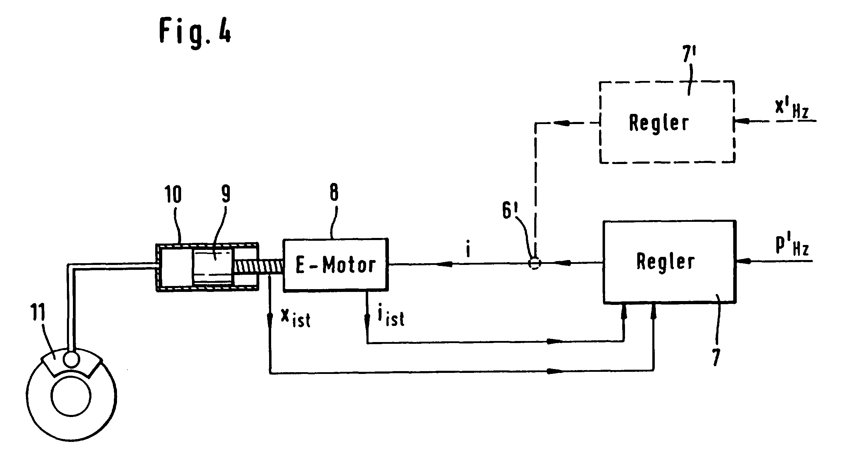

In Fig. 4 ist schematisch verdeutlicht, wie das ermittelte Sollsignal p'_{Hz} weiterverarbeitet werden kann. Ein Regler 7 ermittelt dazu eine Stellgröße, in diesem Fall den Strom i, mit dem ein Elektromotor 8 beaufschlagt wird. Der Elektromotor 8 verschiebt einen Plunger 9, der in einem Zylinder 10 geführt ist. Das dabei verdrängt Volumen V gelangt in die Radbremse 11 und verschiebt somit die Bremsbeläge. Als Istwerte können sowohl der tatsächliche Stromwert iᵢₛₜ als auch die Verschiebung xᵢₛₜ des Plungers 9 an den Regler 7 zurückgeführt werden. Als Sollwert kann statt p'_{Hz} auch x'_{Hz} verwendet werden. Eine Kombination, bei der beide Sollwerte je einem Regler 7 und dem gestrichelt angedeuteten Regler 7' zugeführt werden, ist als Alternative ebenfalls dargestellt. Die entsprechenden Stellgrößen werden im Summierer 6' addiert und an den Elektromotor weitergegeben.

Der erfindungsgemäße Sollwertgeber verwendet somit die Information "Pedalweg s" in Kombination mit der Information "Pedalkraft p" indem diese in den Eingangsschaltungen 4,5 gewichtet und die entsprechenden Teilsollwerte p'ₛ und P'ₚ zu einem Sollwert p'_{Hz} summiert werden. Hierbei findet eine gegenläufige Gewichtung statt: Bei geringer Kraft am Pedal ist der Pedalweg s vorrangig, mit zunehmender Pedalkraft wird diese stärker gewichtet. Auf diese Weise wird ein ruhiges Bremsenverhalten erzielt, wodurch der Komfort erhöht und der Verschleiß der eingesetzten Komponenten vermindert wird.

## Patentansprüche

1. Sollwertgeber, insbesondere für ein Bremspedal (1) in einem Kraftfahrzeug zur Ansteuerung einer elektrischen Bremsanlage, mit mindestens zwei parallelgeschalteten, nach unterschiedlichen Prinzipien arbeitenden Sensoren (2,3) mit nachgeschalteten elektronischen Eingangsschaltungen (4,5) dadurch gekennzeichnet, daß die Ausgangssignale (s,p) der Sensoren (2,3) zur Erzeugung des elektrischen Sollwerts (p'_{Hz}, x'_{Hz}) in den elektronischen Eingangsschaltungen (4,5) gewichtet und die entsprechenden Teilsollwerte (p'ₛ, P'ₚ, x'ₛ, x'ₚ) summiert werden.

2. Sollwertgeber nach Anspruch 1, dadurch gekennzeichnet, daß die Wichtung in Abhängigkeit von dem Ausgangssignal (s,p) zumindest eines der Sensoren (2,3) erfolgt.

3. Sollwertgeber nach einem der vorhergehenden Ansprüche, dadurch gekennzeichnet, daß die Wichtung in Abhängigkeit von weiteren, im Kraftfahrzeug vorhandenen Sensorsignalen (T,h) erfolgt.

4. Sollwertgeber nach einem der vorhergehenden Ansprüche, dadurch gekennzeichnet, daß die Wichtung gemäß mindestens einer, insbesondere in der elektrischen Eingangsschaltungen (4,5) abgespeicherten Wichtungsfunktion (f(s,p,T,h)) erfolgt.

5. Sollwertgeber nach einem der Ansprüche 1 bis 4, dadurch gekennzeichnet, daß jede Eingangsschaltung (4,5) einen Teilsollwert (p'ₛ, p'ₚ) für den einzustellenden Druck (p'_{Hz}) einer hydraulischen Bremsanlage abgibt.

6. Sollwertgeber nach einem der Ansprüche 1 bis 4, dadurch gekennzeichnet, daß jede Eingangsschaltung (4,5) einen Teilsollwert (x'ₛ, x'ₚ) für den einzustellenden Weg (x'_{Hz}) eines Bremsbelags abgibt.

7. Sollwertgeber nach einem der Ansprüche 1 bis 4, dadurch gekennzeichnet, daß jede Eingangsschaltung (4,5) einen Teilsollwert für die einzustellende Verzögerung des Fahrzeugs abgibt.

8. Sollwertgeber nach einem der Ansprüche 5 bis 7, dadurch gekennzeichnet, daß Sollwerte (p'_{Hz},x'_{Hz}) für verschiedene Größen ermittelt werden, die jeweils von einem entsprechenden Regler (7,7') verarbeitet werden, wobei die Stellgrößen der Regler (7,7') summiert werden.

9. Sollwertgeber nach einem der vorhergehenden Ansprüche, dadurch gekennzeichnet, daß zwei Sensoren verwendet werden, von denen einer ein Drucksensor (3) und der andere ein Wegsensor (2) ist.

## Claims

1. Set point generator, in particular for a brake pedal (1) in an automotive vehicle for the control of an electric brake system, with at least two parallel connected sensors (2,3) working in accordance with different principles, with subsequently connected electronic input circuits (4,5),
characterized in that, for the generation of the electric set point (p'_{Hz},x'_{Hz}), the output signals (s,p) of the sensors (2,3) are weighted in the electronic input circuits (4,5) and the respective partial set points (p'ₛ,p'ₚ,x'ₛ,x'ₚ) are summed up.

2. Set point generator according to claim 1,
characterized in that the weighting takes place in dependence on the output signal (s,p) of at least one of the sensors (2,3).

3. Set point generator according to any one of the preceding claims,
characterized in that the weighting takes place in dependence on other sensor signals (T,h) available in the vehicle.

4. Set point generator according to any one of the preceding claims,
characterized in that the weighting takes place according to at least one weighting function (f(s,p,T,h) which is stored, in particular, in the electronic input circuits (4,5).

5. Set point generator according to any one of the claims 1 to 4,
characterized in that each input circuit (4,5) delivers a partial set point (p'ₛ,p'ₚ) for the pressure (p'_{Hz}) that is to adjust in a hydraulic brake system.

6. Set point generator according to any one of the claims 1 to 4,
characterized in that each input circuit (4,5) delivers a partial set point (x'ₛ,x'ₚ) for the brake pad travel (x'_{Hz}) that is to adjust.

7. Set point generator according to any one of the claims 1 to 4,
characterized in that each input circuit (4,5) delivers a partial set point for the vehicle deceleration that is to adjust.

8. Set point generator according to any one of the claims 5 to 7,
characterized in that set points (p'_{Hz},x'_{Hz}) for different variables are determined which are processed by a respective controller (7,7') each, whereafter the control variables of the controllers (7,7') are summed up.

9. Set point generator according to any one of the preceding claims,
characterized in that two sensors are utilized, one of which is a pressure sensor (3), and the other one of which is a travel sensor (2).

## Revendications

1. Générateur de valeur de consigne, notamment pour une pédale de frein (1) dans un véhicule automobile pour commander un système de freinage électrique, comprenant au moins deux capteurs (2, 3) qui sont branchés en parallèle et fonctionnent suivant des principes différents et qui comportent des circuits d'entrée électroniques (4, 5) connectés en aval, caractérisé en ce que les signaux de sortie (s, p) des capteurs (2, 3) sont pondérés pour produire la valeur de consigne électrique (p'_{Hz}, x'_{Hz}) dans les circuits d'entrée électroniques (4, 5) et les valeurs de consigne partielles correspondantes (p'ₛ, P'ₚ, x'ₛ, x'ₚ) sont additionnées.

2. Générateur de valeur de consigne suivant la revendication 1, caractérisé en ce que la pondération s'effectue en fonction du signal de sortie (s, p) d'au moins l'un des capteurs (2, 3).

3. Générateur de valeur de consigne suivant l'une des revendications précédentes, caractérisé en ce que la pondération s'effectue en fonction d'autres signaux de capteur (T, h) existant dans le véhicule automobile.

4. Générateur de valeur de consigne suivant l'une des revendications précédentes, caractérisé en ce que la pondération s'effectue en fonction d'au moins une fonction de pondération (f(s,p,T,h)), notamment rangée en mémoire dans les circuits d'entrée électriques (4, 5).

5. Générateur de valeur de consigne suivant l'une des revendications 1 à 4, caractérisé en ce que chaque circuit d'entrée (4, 5) délivre une valeur de consigne partielle (p'ₛ, p'ₚ) pour la pression devant être réglée (p'_{Hz}) d'un système de freinage hydraulique.

6. Générateur de valeur de consigne suivant l'une des revendications 1 à 4, caractérisé en ce que chaque circuit d'entrée (4, 5) délivre une valeur de consigne partielle (x'ₛ, x'ₚ) pour la course devant être réglée (x'_{Hz}) d'une garniture de frein.

7. Générateur de valeur de consigne suivant l'une des revendications 1 à 4, caractérisé en ce que chaque circuit d'entrée (4, 5) délivre une valeur de consigne partielle pour la décélération devant être réglée du véhicule.

8. Générateur de valeur de consigne suivant l'une des revendications 5 à 7, caractérisé en ce que des valeurs de consigne (p'_{Hz}, x'_{Hz}) sont déterminées pour différentes grandeurs qui sont traitées chacune par un régulateur (7, 7') respectif, les grandeurs de réglage des régulateurs (7, 7') étant additionnées.

9. Générateur de valeur de consigne suivant l'une des revendications précédentes, caractérisé en ce que deux capteurs sont utilisés, dont l'un est un capteur de pression (3) et l'autre un capteur de course (2).
